# EUROPEAN PATENT SPECIFICATION

(11) **EP 3 083 808 B1**
(45) Date of publication and mention of the grant of the patent: **19.02.2020**
(21) Application number: 13899633.5
(22) Date of filing: 18.12.2013
(51) Int. Cl.: C08L 7/02, C09K 3/12, B29C 73/16

(54) **SEALANT COMPOSITION**
DICHTUNGSMITTELZUSAMMENSETZUNG
COMPOSITION D'AGENT D'OBTURATION

(43) Date of publication of application: 26.10.2016
(73) Proprietor: Top Alliance Technology Limited, Tortola (VG); Lam, Koon Fung, Hong Kong (CN)
(72) Inventor: LAM, Koon Fung, Hong Kong (CN); CHAN, Wai Ming, Hong Kong (CN)
(74) Representative: Epping - Hermann - Fischer
(86) International application number: PCT/CN2013/089777
(87) International publication number: WO 2015/089754

(56) References cited:
- EP-A1- 2 655 504
- WO-A2-2007/112010
- CN-A- 1 369 533
- CN-A- 101 928 414
- CN-A- 102 559 139
- CN-A- 103 031 109
- HK-A2- 1 187 487
- US-A1- 2011 144 237

## Description

### SEALANT COMPOSITION FIELD OF THE INVENTION

The present application relates to a sealant composition.

### BACKGROUND OF THE INVENTION

A tire of a vehicle may be punctured by a hard object on the road, and the punctured tire may roll unsteadily. This situation may cause a traffic accident and do physical harm to the driver of the vehicle. In order to avoid this situation, a kind of liquid sealant is developed. As a temporary emergent method, the liquid sealant can be used for repairing the punctured tire, so that the vehicle can continue to travel until reaching a repairing station.

At present, the liquid sealant on the market can be made according to various formulations. Most current formulations of the liquid sealant contain natural latex. For example, the invention patent US 6344499 B1 discloses a kind of sealant comprising 55-60wt% deproteinized natural latex. Another invention patent US 6992119 B2 discloses a kind of sealant comprising 30-60wt% natural latex. For the sealing purpose, various kinds of tackifier such as aromatic terpene resin or phenol resin can be added to the sealant, as pointed out by the invention patent US 6864305 B2. Additionally, the invention patent US 8148448 B2 discloses that 20-40wt% VEVA copolymer resin can be used as the tackifier. The invention patent US 20120277364 A1 discloses that other materials, such as synthetic latex, can also be used as the tackifier.

As the liquid sealant may be applied at a wide temperature range, most kinds of the liquid sealant comprises anti-freezing agent. The choice of the anti-freezing agent is critical for determining whether the liquid sealant has a lower viscosity or not. In the invention patent US 6344499 B1 and the invention patent US 6864305 B2, ethylene glycol or propylene glycol can be used as the anti-freezing agent. However, since ethylene glycol is toxic to the environment, ethylene glycol is not preferable. The patent US 7388041 B2 and the patent US 8183309 B2 disclose glycerin, 1, 3-propanediol, and other anti-freezing agents respectively. To further reducing the viscosity, the patent US 7388041 B2 discloses that potassium acetate can be added into glycerin so that using less quantity of glycerin can achieve the same anti-freezing effect as using a large quantity of pure glycerin.

Furthermore, to improve the sealing performance, solid components can also be added into the liquid sealant. For example, in the sealant formulation disclosed by the patent US 7868061 B2, 2.5-10wt% fiber material is added into the sealant, and the latex component is reduced to 1-10wt%. In another invention patent US 7589135 B2, a kind of sealant comprising synthetic short fibers and rubber latex is disclosed.

Except the sealing performance, the stability of the liquid sealant is also important, particularly in the liquid sealant comprising natural latex. Surfactant can be added into the liquid sealant to improve the stability of the liquid sealant. In general, anionic surfactant added into the liquid sealant can achieve a superior stabilizing effect, but it would result in a high viscosity of the liquid sealant, especially at a low temperature. Thus, the patent US 8242196 B2 mentions that it is preferred to use nonionic surfactant. The invention patent US 8470909 B2 discloses a combination comprising both anionic surfactant and nonionic surfactant, which is configured for improving the stabilization of the liquid sealant.

Although a number of sealant products have been developed, most of them contain solid contents with large mass percentages (above 15wt%). When these sealant products are used, they may cause environmental pollution problems or cleanliness problems. However, other sealant products may be unstable or have not a good tire sealing effect at a wide temperature range. Furthermore, the use of sealant comprising toxic components such as ethylene glycol is undesirable, and solid particles and fibers used in sealant may cause sedimentation problems.

CN 103 031109 A discloses a tire patching agent comprising carbon nanoparticles.

EP 2 655 504 A1 discloses a sealing composition for repairing tyres comprising: 15 to 80% of natural latex, 5 to 50% of synthetic latex, 10 to 60% of a glycol selected from ethylene glycol and propylene glycol and 0.05 to 5% of a mineral chosen from a phyllosilicate and silica having an average granulometric distribution in the range between 5 and 95 nm.

### SUMMARY OF THE INVENTION

The objective of the present application is to provide a sealant composition, aiming at the defect that the sealing performance and the stability of the sealant in the prior art are not good.

The technical solutions of the present application for solving the technical problems are as follows:
In one aspect, a sealant composition is provided, the sealant composition comprises latex emulsion, nanoporous particles, surfactant, anti-freezing agent, wetting agent, and water.

According to the present invention, the nanoporous particles include at least one of zeolite, silica aerogel, mesoporous silica, carbon aerogel, mesoporous carbon, activated carbon, cenosphere, diatomite, porous metal organic frameworks (MOFs).

In another embodiment, the weight percentage of the nanoporous particles in the sealant composition is ranged from 0.01% to 5%.

In another embodiment, the weight percentage of the anti-freezing agent in the sealant composition is ranged from 40% to 90%.

In another embodiment, the anti-freezing agent includes at least one of propylene glycol, glycerin, diethylene glycol, and 1,3-propanediol.

In another embodiment, the weight percentage of the latex emulsion in the sealant composition is ranged from 2% to 20%.

In another embodiment, the weight percentage of the surfactant in the sealant composition is ranged from 0.1% to 2.5%.

In another embodiment, the weight percentage of the wetting agent in the sealant composition is ranged from the 0.01% to 5%.

In another embodiment, the sealant composition further comprises anti-freezing additive, and the anti-freezing additive includes inorganic salts and/or organic salts.

In another embodiment, the sealant composition further comprises assisted additive, and the assisted additive includes at least one of anti-corrosion additive, insecticide, pH-modifier, anti-foaming agent, preservative, colorant, and odorant.

The sealant composition of the present application achieves a good sealing performance for the puncture of the tire. Furthermore, the sealant composition is easy to use and non-perishable, and has a long shelf life, which endows the sealant composition with a good market prospect.

### DETAILED DESCRIPTION OF THE PREFERRED EMBODIMENT

The present application discloses a sealant composition for repairing tires. The sealant composition comprises latex emulsion, and solid particles and fibers configured for achieving the sealing purpose. When the sealant composition flows through a tire puncture, a pressure difference between the interior of the tire and the external environment generates great shearing force, and the shearing force makes the latex emulsion form solid rubber. In this way, the tire puncture is sealed.

Specifically, in the present application, the sealant composition comprises the latex emulsion, nanoporous particles, surfactant, anti-freezing agent, wetting agent, and water. Furthermore, the sealant composition further comprises anti-freezing additive.

Furthermore, in the present application, the latex emulsion can be natural latex or synthetic latex. If the latex emulsion is natural latex, the natural latex including no impurity such as unwanted proteins, lipid, minerals, inorganic ions, and other contaminants is preferable, and should be capable of being obtained by means of purchase. The quality of the natural latex depends on the source of the latex material. The latex emulsion can also be synthetic latex such as NBR or SBR. In the present application, the weight percentage of the latex emulsion in the sealant composition is ranged from 2% to 20%, preferably from 6% to 11%.

Furthermore, in the present application, the nanoporous particles can be granular, fibrous, or in other shapes. The nanoporous particles have a low density because of the nanoporous structures, so the sedimentation odds of the sealant composition including the nanoporous particles are decreased. Moreover, a small amount (by weight) of the nanoporous particles can enhance the sealing performance for tire punctures of the sealant composition effectively because of its low density, so that the sealant composition including the nanoporous particles has a wider market prospect than normal sealant compositions.

Specially, in the present application, a small amount of nanoporous particles involved in the sealant composition may deposit or settle, but deposited or settled nanoporous particles can be easily dispersed again by slightly shaking the sealant compositon. The nanoporous particles includes at least one of zeolite, silica aerogel, mesoporous silica, carbon aerogel, mesoporous carbon, activated carbon, cenosphere, diatomite, and porous metal organic frameworks (MOFs). Furthermore, in the present application, the nanoporous particles with chitosan gel particles can also be added into the sealant composition, and the method for adding the chitosan gel particles into the sealant composition has been disclosed by the previous invention patent US 20120118199 A1.

In the present application, the pore size of the nanoporous particles is at least 0.5nm, preferably larger than 2nm, and the porosity of the nanoporous particles is ranged from 0.1 to 0.95. Moreover, the nanoporous particles can be granular, fibrous, or in other shapes, and the particle size of the nanoporous particles is less than 100 microns. Furthermore, when the specific surface area of the nanoporous particles is measured by the nitrogen absorption method, the specific surface area of the nanoporous particles should be more than 100 m<2>/g. The weight percentage of the nanoporous particles in the sealant composition is ranged from 0.01% to 5%, and preferably from 0.1% to 1%.

Furthermore, in the present application, the sealant composition further comprises the water used as the medium configured for enabling the latex emulsion and the nanoporous particles to suspend. In the present application, the weight percentage of the water in the sealant composition is ranged from 0.01% to 42%.

In the present application, the sealant composition further comprises at least one kind of anti-freezing agent, such as glycol. The anti-freezing agent is used to widen an operational temperature range of the sealant composition. The anti-freezing agent can be at least one of propylene glycol, glycerin, diethylene glycol, and 1, 3-propanediol, etc. In the present application, the weight percentage of the anti-freezing agent in the sealant composition is ranged from 40% to 90%. Besides, when the sealant composition includes two or more kinds of anti-freezing agent, there is no limitation to the ratio between different kinds of anti-freezing agent.

Furthermore, the sealant composition can further comprise the anti-freezing additive, and the weight percentage of the anti-freezing additive in the sealant composition is ranged from 0.01% to 10%. The anti-freezing additive includes inorganic salts and/or organic salts (e.g., potassium acetate) used to enhance the anti-freezing effect of the sealant composition. In the present application, the operational temperature range of the sealant composition is between -40°C and 80°C.

Furthermore, the sealant composition further comprises at least one kind of surfactant. The surfactant is used to improve the stability of the latex emulsion so as to extend the shelf life of the sealant composition. The surfactant can be added into the sealant composition directly, and can also be mixed with the latex emulsion and then added into the sealant composition.

The surfactant can be anionic surfactant and/or non-ionic surfactant. The non-ionic surfactant can be at least one of polyoxyalkylene alkyl ether, polyoxyalkylene alkenyl ether, polyoxyethylene alkylamine, and triethanolamine laurate. The anionic surfactant can be SDS. Although SDS may increase the viscosity of the sealant composition, it can stabilize the latex emulsion in the sealant composition effectively.

The sealant composition can include composite surfactant formed by mixing different kinds of surfactant together, wherein the kinds of the surfactant for forming the composite surfactant can be selected according to the kind and the amount of the latex emulsion used in the sealant composition. The composite surfactant can be a mixture of different kinds of nonionic surfactant, a mixture of at least one kind of nonionic surfactant and at least one kind of anionic surfactant, or a mixture of different kinds of anionic surfactant.

In the present application, the weight percentage of the surfactant in the sealant composition is ranged from 0.1% to 2.5%.

Furthermore, the sealant composition further comprises the wetting agent (e.g., alcohol, ether, or ester) used to improve the wettability, viscosity, and spreading property of the sealant composition. The wetting agent is used to decrease the surface tension of the sealant composition, so that the sealant composition can spread to an end surface area of a tire more easily. Thus, the sealant composition can effectively seal a puncture out of a tread area of a tire.

In the present application, the wetting agent can be ethanol, propanol, isopropanol, ethyl butyrate, dimethyl succinate, or other chemical materials, etc. These wetting agents have low surface tension, so that the surface tension of the sealant composition can be effectively reduced when these wetting agents are added into the sealant composition. In the present application, the weight percentage of the wetting agent in the sealant composition is ranged from the 0.01% to 5%. It is evident that the wetting agent decreases the contact angle of the sealant composition. Meanwhile, the wetting agent can enhance the anti-freezing effect and stabilizing effect of the sealant composition.

Additionally, the sealant composition can further comprise assisted additive. The assisted additive includes at least one of anti-corrosion additive, insecticide, pH-modifier, anti-foaming agent, preservative, colorant, and odorant.

The assisted additive is used to add corresponding functions of the sealant composition. For example, the preservative can be added into the sealant composition for preserving the biodegradable components in the sealant composition, so that the shelf-life of the sealant composition can be extended to five years or more. The anti-corrosion additive can be added into the sealant composition to prevent the interior of a tire from rusting. The colorant can be used to dye the sealant composition, and the odorant can be used to eliminate pungent smell of the sealant composition. The colorant and the odorant do not cause any adverse effect on the sealing property of the sealant composition. The anti-foaming agent can be optionally added into the sealant composition to prevent the sealant composition from foaming. The pH-modifier is used for adjusting the pH of the sealant composition. When the pH of the sealant composition is more than 8, the latex emulsion in the sealant composition is more stable. The weight percentage of the assisted additive in the sealant composition is arranged from 0.01% to 1%.

The sealant composition of the present application can perform a significant sealing effect on a puncture of a tire caused by a spike with the length that is less than 8 mm. The sealant composition can keep the puncture of the tire being sealed for about 12-48 hours.

In the present application, the viscosity of the sealant composition is in the range of 18-800mPas, and can change with the ambient temperature. The pH of the sealant composition is adjusted to be more than 8, preferably in the range of 8-11. When the pH of the sealant composition is between 8 and 11, the latex emulsion in the sealant composition is more stable. Furthermore, when the nanoporous particles are used to replace solid particles with a high density used in typical sealant compositions, the sealant composition does not generate evident settlement in at least 24 hours. When the surfactant and the preservative are added into the sealant composition, the sealant composition can maintain the proper function thereof for more than five years. In use, the sealant composition is injected into a tire through a hose under the action of compressed air, wherein, the injection pressure is preferably 2.5-10bar, and the valve core of the tire can be either removed or not. In addition, the sealant composition can spread to reach the end surface area of the tire, so that a puncture out of the tread area of the tire can also be effectively sealed.

To test the sealant performance of the sealant composition on tires, a spike with a length that is less than 8mm is used to form a puncture formed on a tire. The tire is mounted onto a vehicle, and the sealant composition is injected into the tire. The vehicle with the tire is then driven to run for less than 20km. Every time when the vehicle runs for 2-5km, the air leakage of the tire is checked by measuring the inner tire pressure. In this way, the sealing effect on the tire puncture, which is caused by the sealant composition, can be recorded by the aforementioned method. If the decrement of the inner tire pressure is less than 0.2bar, it is indicated that the sealant composition seals the tire puncture successfully, that is, the sealing performance of the sealant composition is good. After the tire is detached from the vehicle, the tire is kept being stationary, with the tire puncture facing upwards. The pressure decrement can be measured again after 24h or 48h to confirm the sealing performance.

The shelf life of the sealant composition can be tested by static aging test and heat dynamic test. In the static aging test, the sealant composition is placed in an oven at a temperature of 70 °C or more for more than 40 days, and thus the sealing performance of the sealant composition can be tested as described above.

Twelve embodiments of the sealant composition are shown as follows.

### Embodiment 1

The sealant composition comprises: 17.39wt% water, 55wt% glycerin, 20wt% natural latex, 5wt% ethanol, 1wt% non-ionic surfactant, 1.5wt% anionic surfactant, 0.01wt% silica aerogel, and 0.1wt% assisted additive.

### Embodiment 2

The sealant composition comprises: 32.01wt% water, 40wt% glycerin, 5wt% potassium acetate, 5wt% Inorganic salt, 10wt% natural latex, 2.5wt% ethanol, 1wt% non-ionic surfactant, 0.5wt% anionic surfactant, 1wt% mesoporous silica, 0.5wt% silica aerogel, 1.99wt% activated carbon, and 0.5wt% assisted additive.

### Embodiment 3

The sealant composition comprises: 33.15wt% water, 50wt% glycerin, 14wt% synthetic latex, 2.2wt% ethanol, 0.35wt% non-ionic surfactant, 0.2wt% cenosphere, and 0.1wt% assisted additive.

### Embodiment 4

The sealant composition comprises: 38.3wt% water, 48wt% glycerin, 10wt% synthetic latex, 2.5wt% ethanol, 0.7wt% non-ionic surfactant, 0.2wt% anionic surfactant, 0.2wt% silica aerogel, and 0.1wt% assisted additive.

### Embodiment 5

The sealant composition comprises: 38.2wt% water, 48wt% 1,3-propanediol, 10wt% synthetic latex, 2.5wt% ethanol, 0.7wt% non-ionic surfactant, 0.3wt% anionic surfactant, 0.2wt% mesoporous carbon, and 0.1wt% assisted additive.

### Embodiment 6

The sealant composition comprises: 38.35wt% water, 48wt% p ropylene glycol , 10wt% synthetic latex, 2.5wt% isopropanol, 0.7wt% non-ionic surfactant, 0.3wt% anionic surfactant, 0.05wt% silica aerogel, and 0.1wt% assisted additive.

### Embodiment 7

The sealant composition comprises: 14.7wt% water, 70wt% glycerin, 5wt% inorganic salt, 5wt% natural latex, 2wt% non-ionic surfactant, 2wt% silica aerogel, 1wt% zeolite, and 0.3wt% assisted additive.

### Embodiment 8

The sealant composition comprises: 2.8wt% water, 90wt% propylene glycol, 2wt% synthetic latex, 0.1wt% anionic surfactant, 2wt% silica aerogel, 3wt% carbon aerogel, and 0.1wt% assisted additive.

### Embodiment 9

The sealant composition comprises: 40.3wt% water, 45wt% propylene glycol, 2wt% potassium acetate, 8wt% synthetic latex, 2.5wt% isopropanol, 1wt% non-ionic surfactant, 0.6wt% anionic surfactant, 0.2wt% mesoporous silica, 0.1wt% silica aerogel, 0.1wt% carbon aerogel, 0.1wt% cenosphere, and 0.1wt% assisted additive.

### Embodiment 10

The sealant composition comprises 34.3wt% water, 48wt% propylene glycol, 2wt% potassium acetate, 10wt% synthetic latex, 1wt% isopropanol, 2wt% n-propanol, 0.7wt% non-ionic surfactant, 0.5wt% anionic surfactant, 0.2wt% mesoporous silica, 0.2wt% activated carbon, 0.1wt% cenosphere, and 1wt% assisted additive.

### Embodiment 11

The sealant composition comprises: 28.6wt% water, 54wt% glycerin, 10wt% synthetic latex, 5wt% ether, 1wt% non-ionic surfactant, 0.1wt% anionic surfactant, 0.2wt% activated carbon, 0.1wt% cenosphere, and 1wt% assisted additive.

### Embodiment 12

The sealant composition comprises: 28.6wt% water, 54wt% glycerin, 10wt% synthetic latex, 5wt% ester, 1wt% non-ionic surfactant, 0.1wt% anionic surfactant, 0.2wt% activated carbon, 0.1wt% cenosphere, and 1wt% assisted additive.

Table 1 shows test results of the above-mentioned twelve embodiments of the present application as follows.

**Table 1**

| Embodiment number | Viscosity (mPas) at -30°C | Viscosity (mPas) at 25°C | pH | Solid content (%) | Sealing performance | Aging tests | Cream formation (wt%) |
|---|---|---|---|---|---|---|---|
| 1 | 239 | 35 | 11 | 12.3 | Good | Pass | <10 |
| 2 | 310 | 28 | 11.5 | 10 | Good | Pass | <10 |
| 3 | 165 | 32 | 10.5 | 9.3 | Good | Pass | <10 |
| 4 | 160 | 36 | 10.5 | 7.2 | Good | Pass | <10 |
| 5 | 130 | 18 | 10.8 | 7.3 | Good | Pass | <10 |
| 6 | 202 | 25 | 11 | 7.1 | Good | Pass | <10 |
| 7 | 720 | 25 | 10.9 | 8 | Good | Pass | <10 |
| 8 | 800 | 48 | 9 | 6.3 | Fair | Pass | <10 |
| 9 | 220 | 26 | 8 | 6.6 | Good | Pass | <10 |
| 10 | 220 | 20 | 9.5 | 7.7 | Good | Pass | <10 |
| 11 | 250 | 20 | 10 | 7.4 | Good | Pass | <10 |
| 12 | 261 | 26 | 10 | 7.4 | Good | Pass | <10 |

In the present application, the viscosity of the sealant composition is ranged from 18mPas to 800mPas ; and the pH of the sealant composition is ranged from 8 to 11. The operational temperature of the sealant composition is ranged from -40°C to 80 °C . The sealant composition can seal the puncture of the tire for more than 24 hours. After the sealant composition is used to seal the tire puncture, it can be cleaned easily by water flushing.

Above all, the sealant composition of the present application achieves a good sealing performance for the puncture of the tire. Furthermore, the sealant composition is easy to use and non-perishable, and has a long shelf life, which endows the sealant composition with a good market prospect.

## Claims

1. A sealant composition, wherein, the sealant composition comprises latex emulsion, nanoporous particles, surfactant, anti-freezing agent, wetting agent, and water;
the nanoporous particles include at least one of zeolite, carbon aerogel, diatomite, porous metal organic frameworks.

2. The sealant composition according to claim 1, wherein, the weight percentage of the nanoporous particles in the sealant composition is ranged from 0.01% to 5%.

3. The sealant composition according to claim 2, wherein, the weight percentage of the anti-freezing agent in the sealant composition is ranged from 40% to 90%.

4. The sealant composition according to claim 3, wherein, the anti-freezing agent includes at least one of propylene glycol, glycerin, diethylene glycol, and 1,3-propanediol.

5. The sealant composition according to claim 3, wherein, the weight percentage of the latex emulsion in the sealant composition is ranged from 2% to 20%.

6. The sealant composition according to claim 5, wherein, the weight percentage of the surfactant in the sealant composition is ranged from 0.1% to 2.5%.

7. The sealant composition according to claim 6, wherein, the weight percentage of the wetting agent in the sealant composition is ranged from the 0.01% to 5%.

8. The sealant composition according to claim 7, wherein, the sealant composition further comprises anti-freezing additive, and the anti-freezing additive includes inorganic salts and/or organic salts.

9. The sealant composition according to claim 8, wherein, the sealant composition further comprises assisted additive, and the assisted additive includes at least one of anti-corrosion additive, insecticide, pH-modifier, anti-foaming agent, preservative, colorant, and odorant.

## Patentansprüche

1. Dichtungsmittelzusammensetzung, wobei die Dichtungsmittelzusammensetzung eine Latexemulsion, nanoporöse Partikel, einen oberflächenaktiven Stoff, ein Frostschutzmittel, ein Netzmittel und Wasser umfasst;
wobei die nanoporösen Partikel mindestens eins aus Zeolith, Kohlenstoff-Aerogel, Diatomit und porösen Metall-organischen Gerüsten enthalten.

2. Dichtungsmittelzusammensetzung nach Anspruch 1, wobei der Gewichtsanteil der nanoporösen Partikel in der Dichtungsmittelzusammensetzung im Bereich von 0,01 % bis 5 % liegt.

3. Dichtungsmittelzusammensetzung nach Anspruch 2, wobei der Gewichtsanteil des Frostschutzmittels in der Dichtungsmittelzusammensetzung im Bereich von 40 % bis 90 % liegt.

4. Dichtungsmittelzusammensetzung nach Anspruch 3, wobei das Frostschutzmittel mindestens eins aus Propylenglycol, Glycerin, Diethylenglycol und 1,3-Propandiol enthält.

5. Dichtungsmittelzusammensetzung nach Anspruch 3, wobei der Gewichtsanteil der Latexemulsion in der Dichtungsmittelzusammensetzung im Bereich von 2 % bis 20 % liegt.

6. Dichtungsmittelzusammensetzung nach Anspruch 5, wobei der Gewichtsanteil des oberflächenaktiven Stoffs in der Dichtungsmittelzusammensetzung im Bereich von 0,1 % bis 2,5 % liegt.

7. Dichtungsmittelzusammensetzung nach Anspruch 6, wobei der Gewichtsanteil des Netzmittels in der Dichtungsmittelzusammensetzung im Bereich von 0,01 % bis 5 % liegt.

8. Dichtungsmittelzusammensetzung nach Anspruch 7, wobei die Dichtungsmittelzusammensetzung weiter einen Frostschutzzusatz umfasst und der Frostschutzzusatz anorganische Salze und/oder organische Salze enthält.

9. Dichtungsmittelzusammensetzung nach Anspruch 8, wobei die Dichtungsmittelzusammensetzung weiter einen Hilfszusatz umfasst und der Hilfszusatz mindestens eins aus einem Korrosionsschutzzusatz, einem Insektizid, einem pH-Regulator, einem Entschäumer, einem Konservierungsmittel, einem Färbemittel und einem Odoriermittel enthält.

## Revendications

1. Composition d'agent d'étanchéité, dans laquelle la composition d'agent d'étanchéité comprend une émulsion de latex, des particules nanoporeuses, un agent tensioactif, un agent antigel, un agent mouillant et de l'eau ;
les particules nanoporeuses comprennent au moins l'un(e) d'une zéolite, d'un aérogel de carbone, d'une diatomite, de matériaux Métal Organic Frameworks poreux.

2. Composition d'agent d'étanchéité selon la revendication 1, dans laquelle le pourcentage en poids des particules nanoporeuses dans la composition d'agent d'étanchéité est compris entre 0,01 % et 5 %.

3. Composition d'agent d'étanchéité selon la revendication 2, dans laquelle le pourcentage en poids de l'agent antigel dans la composition d'agent d'étanchéité est compris entre 40 % et 90 %.

4. Composition d'agent d'étanchéité selon la revendication 3, dans laquelle l'agent antigel comprend au moins l'un du propylène glycol, du glycérol, du diéthylène glycol et du 1,3-propanediol.

5. Composition d'agent d'étanchéité selon la revendication 3, dans laquelle le pourcentage en poids de l'émulsion de latex dans la composition d'agent d'étanchéité est compris entre 2 % et 20 %.

6. Composition d'agent d'étanchéité selon la revendication 5, dans laquelle le pourcentage en poids de l'agent tensioactif dans la composition d'agent d'étanchéité est compris entre 0,1 % et 2,5 %.

7. Composition d'agent d'étanchéité selon la revendication 6, dans laquelle le pourcentage en poids de l'agent mouillant dans la composition d'agent d'étanchéité est compris entre 0,01 % et 5 %.

8. Composition d'agent d'étanchéité selon la revendication 7, dans laquelle la composition d'agent d'étanchéité comprend en outre un additif antigel, et l'additif antigel comprend des sels inorganiques et/ou des sels organiques.

9. Composition d'agent d'étanchéité selon la revendication 8, dans laquelle la composition d'agent d'étanchéité comprend en outre un additif de soutien, et l'additif de soutien comprend au moins l'un d'un additif anticorrosif, d'un insecticide, d'un régulateur de pH, d'un agent antimousse, d'un agent de conservation, d'un colorant et d'un agent odorant.
